Europäisches Patentamt

European Patent Office

Office européen des brevets

(19)

(11) Publication number: **0 075 541**
A1

(12)

# EUROPEAN PATENT APPLICATION

(21) Application number: **82830228.1**

(22) Date of filing: **03.09.82**

(51) Int. Cl.³: **C 05 D 3/02, C 05 F 11/00, C 05 G 1/00**

(30) Priority: **14.09.81 IT 2395081**

(43) Date of publication of application: **30.03.83**
**Bulletin 83/13**

(84) Designated Contracting States: **AT CH FR GB LI NL SE**

(71) Applicant: **Sanna, Lucio, Via Azzo Porzio, 71, I-26041 Casalmaggiore Cremona (IT)**

(72) Inventor: **Sanna, Lucio, Via Azzo Porzio, 71, I-26041 Casalmaggiore Cremona (IT)**

(74) Representative: **Cicogna, Franco, Ufficio Internazionale Brevetti Dott.Prof. Franco Cicogna Via Visconti di Modrone, 14/A, I-20122 - Milano (IT)**

(54) **Basic polyvalent auxinic stimulating vegetal core, provided with nitrogenasic and biodynamic activity.**

(57) The present invention relates to a new basic polyvalent auxinic stimulating vegetal core, provided with nitrogenasic and biodynamic activity, which consists substantially of suitable treated base components, such as, in particular, calcium oxide, sand and sawdust.

ACTORUM AG

COMPLETE DOCUMENT

EP 0 075 541 A1

## BACKGROUND OF THE INVENTION

The present invention relates to a polyvalent stimulating compound for vegetables, which is realized in the form of high duration and efficiency artificial rock, particularly effective to integrally exploit the natural sources, everywhere they are present, in order to increase the agricultural yield, in the most economical way and with a greater respect of the ecological environment.

The ever increasing world food request, which imposes intensive tilling systems, has determined a quick structural and biological alteration of the tillable soils, depending on the increasing consumption of the vitally important raw material natural sources.

The uncontrolled use of excessive amounts of chemical manure or fertilizers, which is considered as indispensable in order to obtain a high agricultural yield, has determined an excessive waste of "noble" raw materials, such as phosphorites and potassium salts, while requiring a high power waste for producing the nitrogen compounds.

Accordingly even the production of primary necessity food materials is presently excessively
expensive.

Moreover the chemical manure or
fertilizers are generally supplied to soil in
unbalanced amounts, thereby they are accumulated in
the waste water and basins, polluting the latter and
originating the well known eutophry and high nitrite
contents phenomena. Also the increasing worsening
of the worked soil physical structure is a logical
consequence of the overintensive exploiting, deriving
from a forced mechanical deflocculation and from
the exhaustion of the "humus" and calcium reserves
preexisting in the soil surface profile, since those
two elements are indispensable for preserving the
soil structure and integrally exploiting the chemical
administered manure or fertilizers.

This situation is further worsened by some
new soil treating or working techniques which
do not carry out a deep ploughing thereby leaving on
the surface always the same already exploited
soil.

This surface worsened condition, further
aggravated by the destroying action on the overall worked or treated surface by the elastic force of the trapped air, also causes serious problems of

hydrogeological and alluvial nature (the erosion of the fruitful soil in Italy is greater than 1,000,000,000 m$^3$ per year).

The ever increasing sinking of the supply water bearing strata clearly indicates that, since the impermeability of the surface soil does not assure a gradual absorption of the rain water,

a lack of balance occurs on the "natural continuum"

existing from the water bearing strata to the

water of rivers and lakes.

### SUMMARY OF THE INVENTION

Accordingly, the main object of the present invention is to eliminate the thereinabove mentioned drawbacks, by providing a fertilizing product effective to be made starting from unexpensive and easily available materials, which heretofore were considered of poor agricultural value, and effective to provide, also depending on the treating method used for mixing said materials, great increments in the restructuring and exploiting of the soil, in the most economic manner and with great energy savings on the field.

More specifically, the present invention proposes a product obtained by combining the following naturally occurring elements:

1) powder calcium oxide;lump calcium oxide;newly formed calcium hydroxide;

2) river sand,mainly of the siliceous type;sea sand; quartz rock powder;pure quartz powder;mainly sandy screened soil material;quarry sand;hydrated silica gels and the like material;quartz stone and rock working and cutting wastes;

3) thin wood sawdust,preferably of the sweet type; dried vegetable waste powder;peat;humus screened material;hydrolized wood and the like materials; working wastes from extraction treatings of vegetable materials such as sugar beets,sugar-cane,olives and the like.

While the rates of the several components may be varied depending on the different used materials,the functional characteristics of the obtained product are never completely repressed.

A volumetric formula which has been found to be an optimal one in the experimentation tests is the following:

0075541

1) Powder calcium oxide 30%;

2) Thin river sand 60%

3) Thin poplar wood sawdust 10%

Advantageously the homogeneous mixing step of the product components may precede the hydrating step thereof.

On the other hand, as lump lime is used, the hydrating step of the latter must immediately precede the mixing step with the other two components.

The simultaneous hydrating step of the three components or materials, which are continuously held in motion by a mixing device as far as they are saturated and amalgamated, originates important hydrolysis phenomena of the components.

Infact, there is integrally exploited the maximum hydrolizing power, as determined by the isotermic reaction occurring during the transformation of the calcium oxide to calcium hydroxide.

The strong alkaline reaction and the simultaneous temperature increasing easily cause, due to the introduction of the $OH^-$ into the cristalline lattice of the siliceous material, the peripheral crystal breaking and the formation of polar activity channels.

The simultaneous hydrolysis of the organic material allows for the neogenic product to be fictitiously cemented, in such a way as to be easily attacked by the soil circulating waters.

All of the mentioned advantageous characteristics of the obtained neogenic product are stressed to a maximum degree if the remixing step of the fluidic mass is prolonged for a time period after the mere amalgamation.

The subsequent product crashing step (the most suitable size being that corresponding to a rice grain) may be carried out by any suitable method, depending on the available apparatus, to the state of a dehydrated aggregate or to that corresponding to a definitive drying of the fluidic mass.

The most advantageous drying step is the natural one, leaving the product under a roof structure, possibly provided with a transparent roof (very useful there have been found the quartz glasses).

Accordingly the present invention also comprises the method for preparing the subject

0075541

product grains,which method comprises,more specifically,·the step of homogeneously mixing

the thereinabove mentioned components as the calcium oxide is in powder form,hydrating said components while mixing,thereby obtaining saturation and amalgamation thereof,causing the mixture to rest in order to cause the mass to set,and then crashing and drying,preferably in a natural manner.

According to a variation of the subject method,as lump lime is used,it is possible to carry out the lime hydrating step immediately before the mixing thereof with the other components.

The neogenic artificial rock grains obtained according to the invention,upon spreading on the soil,cause the following phenomena and advantages:

1- the product acts as a consant and long life regulator(slackened solubilization) of the acid pH of the circulating solution,due to the slow and continuous introduction into solution of the $Ca^{++}$

ion,as bridge flocculating cation and physiologic supply for the root ends of the tilled vegetable materials;

2- a sensible improving of the soil structure and preserving thereof(cementing action),also with respect to the humus substances which are present in the soil profile;

3- generation of hydrogen carbonates ($HCO_3$) in aqueous solution,which ion is constantly useful and present in the circulating solution,being moreover indispensable for the solubilization and use by the vegetables of the microelements which are present in the soil;

4- a constant and long life production of hydrolized gel neogenic compounds,provided with a self evident nitrogenasic activity;

5- an optimum performance within the soil,as an "inorganic sublayer" very useful as a protecting receptacle for the development of nitrogen-fixing micro-organisms(which is an indirect type of action, effective to favour in a maximum degree the induction and exploiting of the natural nitrogen);

6- an integral exploiting of the phosphate and potassium based used manure,thereby giving a greater activation effect in the ionic exchange and by means of a constant antagonist action;

0075541

7- auxinic stimulation of great power and duration, effective to provide very large yield increments, also from a quality standpoint;

8- a gradual recovery of the absorbtion power of the agricultural soils;

9- a greater protection of the environment and the water bearing strata from the toxic agricultural wastes;

10-a remarkable enhancing of the crop yield, also with respect to recycled organic substances, with average values of the order of 30%(experimental test data).

While some embodiments of the invention have been thereinabove illustratively disclosed, those skilled in the art will be easily able of providing for several modifications and variations, which are to be considered as falling within the scope of the invention.

0075541

# C L A I M S

1-A basic polyvalent auxinic stimulating vegetal core, provided with biodynamic and nitrogenasic activity, characterized in that it is made by mixing calcium oxide, mainly siliceous sand and thin wood sawdust.

2- Basic polyvalent core according to claim 1, characterized in that said calcium oxide is present in an amount of preferably 20 to 40%, said siliceous sand is present in an amount of preferably 50 to 70% and said wood sawdust in an amount of preferably 5 to 15%, said amounts being effective to be broadly varied, depending on the characteristics of the soils the product is provided for.

3- A method for making the product according to claims 1 and 2, characterized in that it comprises the steps of homogeneously mixing the components as the calcium oxide is in a powder form, hydrating said components while mixing thereby obtaining saturation and amalgamation thereof, causing the mixture to rest in order to cause the mass to set, and then crashing and drying, preferably in a natural manner.

0075541

4- A method according to claim 3, characterized in that it provides for the use of lump lime, the hydrating step immediately preceding the mixing step with the other components.

# 0075541

## EUROPEAN SEARCH REPORT

Application number

EP 82 83 0228

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | C 05 D 3/02 |
| Y | DE-C- 728 877 (DR.G.BEHNEN) *Page 2, example; claim* | 1 | C 05 F 11/00 |
| | | | C 05 G 1/00 |
| | --- | | |
| Y | DE-C- 831 399 (R.AURICH) *Page 3, claims 1,2,3* | 1 | |
| | --- | | |
| Y | FR-A-2 285 353 (TORFSTREUVERBAND) *Page 6, claim 1* | 1 | |
| | --- | | |
| Y | FR-A- 367 670 (E.CHARLES) *Page 2, lines 43-52; page 3, lines 7-20* | 1 | |
| | --- | | |
| A | DE-C- 204 665 (ED.POHL) | | |
| | --- | | TECHNICAL FIELDS SEARCHED (Int. Cl. ³) |
| A | DE-A-2 501 092 (INST. FÜR ENERGETIK) | | |
| | --- | | C 05 G 1/00 |
| A | CH-A- 207 957 (DICKMANN) | | C 05 D 3/02 |
| | | | C 05 F 11/00 |
| | --- | | |
| A | DE-C- 866 488 (H.SCHOLLER) | | |
| | --- | | |
| A | FR-A- 328 756 (JÖRGENSEN) | | |
| | ----- | | |

The present search report has been drawn up for all claims

| Place of search | Date of completion of the search | Examiner |
|---|---|---|
| THE HAGUE | 20-12-1982 | STEELANDT B. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82